# EUROPEAN PATENT APPLICATION

(11) **EP 4 098 108 A1**
(43) Date of publication of application: **07.12.2022**
(21) Application number: 22175026.8
(22) Date of filing: 24.05.2022
(51) Int. Cl.: A01K 7/00

(54) **PET DRINKING FOUNTAIN**

(30) Priority: 02.06.2021 CN 202121216793 U; 02.06.2021 CN 202121217367 U; 01.09.2021 CN 202122101702 U; 12.05.2022 US 202217743256
(71) Applicant: SHENZHEN LIYI99.COM, LTD., Shenzhen 518107 (CN)
(72) Inventor: Wang, Xuzhong, Shenzhen, 518107 (CN)
(74) Representative: Uexküll & Stolberg

(57) **Abstract**

A pet drinking fountain includes a tank (10) for storing water, a pump (20) arranged in the tank (10) to pump water, a pipe (21) connected to the pump (20) through which the water pumped by the pump (20) flows, and a plate (30) for presenting drinking water to pets, disposed above the tank (10) and in fluid communication with the pipe (21). A tray (50) is arranged between the plate (30) and the tank (10). Water in the tank (10) is pumped upwards from the pump (20) into the pipe (21) and then flows out to the plate (30) and then overflows into the tank (10).

## Description

### FIELD OF THE INVENTION

The present invention relates to pet supplies and, more particularly, a pet drinking fountain.

### BACKGROUND OF THE INVENTION

As more and more people start to keep pets, the demand for pet supplies is also increasing, mainly involving clothing, food, housing, transportation and other aspects of pets. Take the pet drinking water items as an example, some pet drinking fountains usually use an open bowl or basin, which is filled with water for pets to drink. However, this kind of drinking device does not conform to the habit of pets such as cats and dogs who like to drink flowing water, and the water contained in it is completely exposed to the outside, and the water in the basin will often become not fresh enough after a long time.

Some pet drinking fountains are widely favored because they can provide pets flowing drinking water through a pump. However, they usually set the pump on the bottom of the water tank, which is troublesome to repeatedly disassembly and assembly the pump when cleaning the water tank.

Some pet drinking fountains include multiple parts that provide a drinking area for pets, and there are gaps or height differences in the assembly of multiple parts, which make the drinking area divided into a number of discontinuous parts, each of which has a small area, resulting in poor drinking experience for pets.

### SUMMARY OF THE INVENTION

In one aspect, a pet drinking fountain is capable of providing flowing and fresh drinking water for pets. Additionally, the pet drinking fountain is arranged for convenient for cleaning the water tank.

In one example, a pet drinking fountain comprises a tank including a bottom and a wall surrounding the bottom. An internal assembly supplies water from the tank to the outside, the internal assembly including a tray, a pump, a pipe and a fixture. The internal assembly is detachably arranged above the bottom. The pump is arranged in the tank to pump water. The pipe is connected to the pump, and water pumped by the pump is supplied to the outside through the pipe. The fixture is configured to extend downward from the tray and fix the connection between the pump and the pipe.

The foregoing example of a pet drinking fountain may include any one or more of the following optional features, structures, and/or forms.

In one optional form, a filter assembly is arranged upstream of the pump.

In another optional form, the filter assembly is arranged on the fixture.

In another optional form, a supporting portion is arranged on the fixture, the supporting portion being provided with a drain hole, and the filter assembly is supported by the supporting portion and arranged upstream of the drain hole.

In another optional form, the fixture includes a first combination and the pump comprises a second combination, the first combination and the second combination are combined to fix the connection between the pump and the pipe.

In another optional form, the fixture comprises a hollow pipe extending downward from the tray, and part or all of the pump is enclosed in the hollow pipe.

In another optional form, the hollow pipe includes a wall on which an overflow hole is arranged.

In another optional form, the hollow pipe includes an opening at a lower end, and the pump is configured to block the opening.

In another optional form, the fixture comprises a first part and a second part that are detachably connected, the first part being connected to the tray, and the pump being fixed on the second part.

In another optional form, a plate detachably is arranged on the tray for presenting the drinking water to pets, and the plate is in fluid communication with the pipe.

In second example, a pet drinking fountain comprises a tank for storing water and a pump arranged in the tank to pump water A pipe is connected to the pump through which the water pumped by the pump flows A plate for presenting drinking water to pets is disposed above the tank and is in fluid communication with the pipe A tray is arranged between the plate and the tank An upper surface of the tray is formed with an embedded part, which is matched with a bottom of the plate in shape The plate is detachably embedded in the embedded part.

The foregoing example of a pet drinking fountain may include any one or more of the following optional features, structures, and/or forms.

In one optional form, the embedded part comprises a drain hole which in fluid communication with the tank.

In another optional form, the embedded part is configured to be formed by sinking on the upper surface of the tray, and when the plate is embedded in the embedded part, an upper surface of the plate and the upper surface of the tray are substantially equal in height at the junction so as to make a smooth transition.

In another optional form, the embedded part comprises an inner wall extending downward from the upper surface of the tray, a support formed by protruding inward from a lower portion of the inner wall toward a center of the embedded part, and the bottom of the plate is supported by the support.

In another optional form, the plate comprises a backflow hole that is in fluid communication with the embedded part.

In another optional form, the tray comprises a side wall formed around the upper surface of the tray, and the height of the side wall is at least higher than the lowest height of the backflow hole.

In another optional form, a filter assembly arranged upstream of the pump.

In another optional form, the filter assembly is arranged in the embedded part.

In another optional form, the plate defines a first drinking area.

In another optional form, the plate and the tray collectively define a second drinking area.

Other features and advantages of the present invention will be described in the following specification, and some of these will become apparent from the description or be understood by implementing the present invention. The objectives and other advantages of the present invention can be implemented or obtained by structures specifically indicated in the written specification, claims, and accompanying drawings.

### BRIEF DESCRIPTION OF THE DRAWINGS

The present invention is described in detail below with reference to the accompanying drawings.
FIG. 1 is a perspective view of a pet drinking fountain of one embodiment.
FIG. 2 is an exploded view of the pet drinking fountain of FIG. 1.
FIG. 3 is a cross-sectional view of the pet drinking fountain of FIG. 1.
FIG. 4 is another exploded view of the pet drinking fountain of FIG. 1, with parts removed for detail.
FIG. 5 is another exploded view of the pet drinking fountain of FIG. 1, with parts removed for detail.
FIG. 6 is another cross-sectional view of the pet drinking fountain of FIG. 1, with parts lifted for detail.
FIG. 7 is another perspective view of the pet drinking fountain of FIG. 1, with parts lifted for detail.
FIG. 8 is a perspective view of a pet drinking fountain of second embodiment.
FIG. 9 is an exploded view of the pet drinking fountain of FIG. 8.
FIG. 10 is a perspective view of a tray for the pet drinking fountain of FIG. 8.

### DETAILED DESCRIPTION

In order to give clearer description of the technical problems to be solved, and the technical solutions and beneficial effects of the fasteners and passage barriers described therein, the details will be further described in below with reference to the accompanying figures. It should be understood that the specific embodiments described here are only used to explain the disclosed pet drinking fountains, and the drawings and specific embodiments described herein are not intended to limit the scope of the disclosure. Rather, the scope of the disclosure is limited only by the claims set forth herein.

When an element is referred to as being "fixed to" or "disposed on" another element, it can be directly connected to the other element or indirectly connected to that element. When an element is said to be "connected to" another element, it can be directly connected to the other element or indirectly connected to that element.

The terms "length", "width", "upper", "lower", "front", "rear", "left", "right", "vertical", "horizontal", "top" , "bottom", "inner", "outer" and other indications of the orientation or positional relationship are based on the orientation or positional relationship shown in the figures, and are only for the convenience of describing the fasteners and passage barriers, and simplifying the description, rather than indicating or implying that the device or element must have a specific orientation, be constructed and operated in a specific orientation.

The terms "first" and "second" are only used for descriptive purposes, and cannot be understood as indicating or implying relative importance or implicitly indicating the number of indicated technical features. Thus, the features identified with the words "first" and "second" may explicitly or implicitly include one or more of these features. In the description, "multiple" means two or more than two, unless otherwise specifically defined.

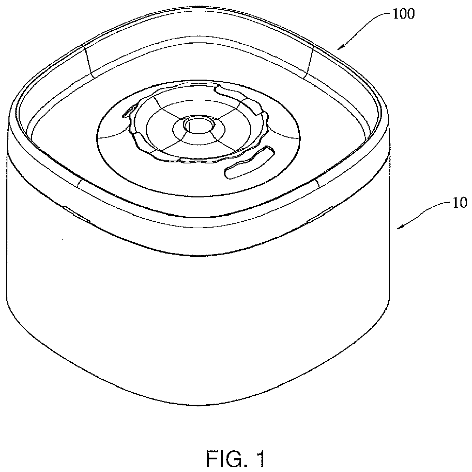

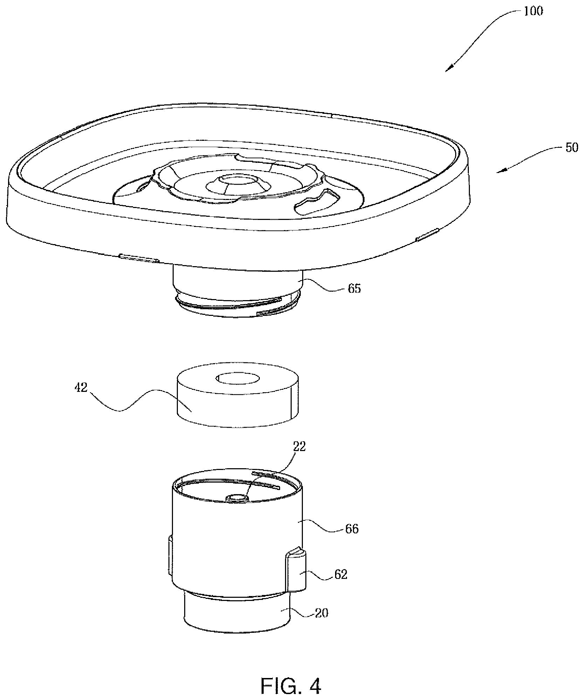

Turning to FIGS. 1-4, a pet drinking fountain generally includes an internal assembly 100 detachably inserted into a tank 10 to supply water from the tank 10 to the outside. The pet drinking fountain may include the tank 10 for storing water, a pump 20 installed or located in the tank 10 to pump the water stored in the tank 10, a water supply pipe 21 connected to the pump 20, and a water supply plate 30. Water in the tank 10 can be supplied to the water supply plate 30 by the pump 20 and the water supply pipe 21. The pump 20, the water supply pipe 21 and the water supply plate 30 may form a part of the internal assembly 100. In some embodiments, the pump 20 may be an electronic device containing internal electronic components, or any other type of water pumping device.

A backflow channel may be provided between the tank 10 and the water supply plate 30, so that the water on the water supply plate 30 can flow back to the tank 10 through the backflow channel. Therefore, the water in the tank 10 can be circulated through the pump 20, the water supply pipe 21, the water supply plate 30 and the backflow channel. The backflow channel will be described below.

The tank 10 may include a wall 11 forming a side of the tank 10 and a bottom 12 provided as a lower surface. The wall 11 includes a main wall 11a formed on the upper side and a supporting wall 11b formed on the lower side, and the bottom 12 may be arranged between the main wall 11a and the supporting wall 11b. The main wall 11a and the bottom 12 may define a water storage area or container, and the support wall 11b may extend downward from the bottom 12 to partially define the bottom or the space below the bottom 12. The tank 10 can have various shapes, and is not limited here. The internal assembly 100 can be inserted into the tank 10 to be arranged above the bottom 12, and water can be supplied from the tank 10 to the water supply plate 30 by the pump 20 and the water supply pipe 21.

The water supply plate 30 may include a body 31 formed with a water supply hole 32, and the water supply pipe 21 communicates with the water supply hole 32 through which water flowing along the water supply pipe 21 can be supplied to the body 31. The water supply pipe 21 can be integrally formed with the water supply plate 30, the wall of the water supply pipe 21 extending downward from the hole 32, and the lower end of the water supply pipe 21 communicating with the water outlet 22 of the pump 20. The water supply hole 32 can be located at the center of the body 31, but in other embodiments, the water supply hole can be located at other positions of the body 31, which is not limited here.

An upper surface 310 of the body 31 may be flat or have a certain inclination or arc, and a water storage groove 33 may be provided on the upper surface 310 around the water supply hole 32. The water storage groove 33 defines a first drinking area 101. A notch 35 can also be provided on the edge of the water supply groove 33. When the water in the water supply groove 33 is full, the water can overflow from the notch 35, and the notch 35 can aid in drainage.

A backflow hole 36 may also be formed on the body 31, the backflow hole 36 communicates with the inside of the tank 10 to form part of the backflow channel, and the water discharged from the water supply hole 32 can flow back to the tank 10 through the backflow hole 36. Therefore, the water in the tank 10 can be circulated through the pump 20, the water supply pipe 21, the water supply hole 32 and the backflow hole 36.

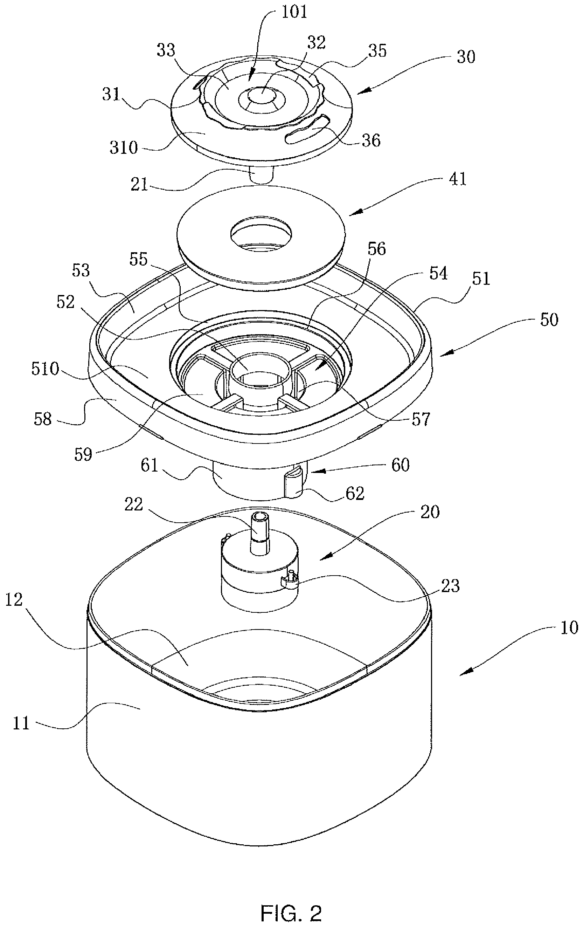

Referring to FIGS. 2-4, the internal assembly 100 may further include a tray 50, and the water supply plate 30 may be detachably disposed at a top of the tray 50. The tray 50 may include a body 51 on which a through hole 52 may be formed, and through which the water supply pipe 21 may communicate with the water outlet 22 of the pump 20. The pump 20, the water supply pipe 21, the water supply plate 30 and the tray 50 may be combined to form the single internal assembly 100.

An upper surface 510 of the body 51 may be flat or have a certain inclination or arc. The body 51 may be formed with an embedded part 54, and the water supply plate 30 may be configured to be embedded in the embedded part 54. The through hole 52 may be formed in a bottom of the embedded part 54, or the bottom of the embedded part 54 may be vacant to form the through hole 52. The backflow hole 36 of the water supply plate 30 can communicate with the embedded part 54 so that the backflow channel is at least partially formed by the backflow hole 36, the embedded part 54, and the through hole 52. Water discharged from the water supply hole 32 can flow back to the tank 10 through the backflow hole 36, the embedded part 54, and the through hole 52. Therefore, the water in the tank 10 can circulate through the pump 20, the water supply pipe 21, the water supply hole 32, the backflow hole 36, the embedded part 54, and the through hole 52.

A bottom of the water supply plate 30 can be matched with the embedded part 54 in shape and the size is slightly smaller than the embedded part 54 so that when the water supply plate 30 is embedded in the embedded part 54, the embedded part 54 can clamp and fix the water supply plate 30. The embedded part 54 can be formed by sinking on the upper surface 510, and make the upper surface 310 of the water supply plate 30 and the upper surface 510 of the tray 50 have substantially the same height at the junction so as to make a smooth transition, so that the upper surface 310 of the water supply plate 30 and the upper surface 510 of the tray 50 jointly define a second drinking area 102 with a larger area and a substantially smooth surface. A support for the water supply plate 30 can be formed in the embedded part 54, so as to keep the upper surface 310 of the water supply plate 30 and the upper surface 510 of the tray 50 at the junction substantially equal in height, so that the transition can be smooth.

The body 51 may further include a side wall 53 formed around the upper surface 510, and the height of the side wall 53 is at least higher than the lowest height of the backflow hole 36, so that the backflow hole 36 forms the lowest height at which water can flow back to the tank 10, which also defines a water storage area between the side wall 53 and the backflow hole 36. The body 51 is also formed with an overlapping edge 58 which is consistent with the shape of the upper end of the tank 10, and the overlapping edge 58 can be overlapped on the upper end of the tank 10.

The embedded part 54 may include an inner wall 55 extending downward from the upper surface 510 of the tray 50, and a support 56 or ledge formed by a protrusion extending inward from a lower portion of the inner wall 55 toward the center of the embedded part 54 The bottom of the water supply plate 30 may be supported on the support 56. The inner wall 55 and the support 56 may be integrally formed or may be separately provided, which is not limited here.

The embedded part 54 may include a bottom plate 59, which may be formed with a drain hole 57. The drain hole 57 communicates with the embedded part 54 and the tank 10, and the backflow hole 36 of the water supply plate 30 may communicate with the embedded part 54, so that at least part of the backflow channel is formed by the backflow hole 36, the embedded part 54 and the drain hole 57 Water discharged from the water supply hole 32 can flow back to the tank 10 through the backflow hole 36, the embedded part 54 and the drain hole 57. Therefore, the water in the tank 10 can circulate through the pump 20, the water supply pipe 21, the water supply hole 32, the backflow hole 36, the embedded part 54, and the drain hole 57. When the bottom of the embedded part 54 is vacant, both the drain hole 57 and the through hole 52 may be formed by the bottom vacancy, which is not limited here. In other embodiments, the support 56 may not be provided, and the bottom of the water supply plate 30 may be supported on the bottom plate 59.

The internal assembly 100 may further include a filter assembly disposed upstream of the pump 20 to filter foreign impurities contained in the water stored in the tank 10 before it flows into the pump 20. Referring to figs. 2-3, the filter assembly may include a first filter 41 placed in the embedded part 54, and the water flowing into the embedded part 54 from the backflow hole 36 is filtered to remove impurities while flowing through the first filter 41, and then flows back to the tank 10. The pump 20, the water supply pipe 21, the water supply plate 30, the first filter 41 and the tray 50 may be combined to form the single internal assembly 100. The water supply plate 30 may be configured to be lifted and removed from the internal assembly 100 to replace the first filter 41 or to clean the water supply plate 30, the embedded part 54, etc.

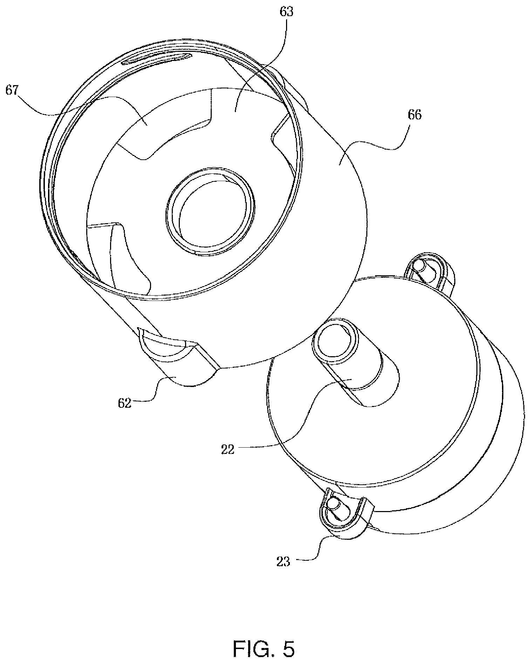

Referring to FIGS. 2-5, the internal assembly 100 may further include a fixture 60 for fixing the pump 20 to the lower end of the water supply pipe 21 when the internal assembly 100 is assembled, and maintaining the lower end of the water supply pipe 21 in communication with the water outlet 22 of the pump 20. The fixture 60 may include a fixing wall 61 extending downward from the bottom of the tray 50 and a first combination 62 provided on the fixing wall 61. The first combination 62 may be combined with a second combination 23 provided on the pump 20 to fix the pump 20 on the fixing wall 61. The first combination 62 and the second combination 23 can be screw holes that are matched, and the first combination 62 and the second combination 23 can be connected by screws. Of course, in other embodiments, the first combination 62 and the second combination 23 can also be matching snaps, or other fixing device, and the pump 20 can be fixed on the fixing wall 61 by snap connection, or other fixing device, which is not limited here.

The filter assembly may include a second filter 42, and the water flowing back to the tank 10 from the drain hole 57 is filtered to remove impurities while flowing through the second filter 42. The pump 20, the water supply pipe 21, the water supply plate 30, the tray 50, and the second filter 42 may be combined to form the single internal assembly 100.

The fixture 60 may further include a support portion 63, which is disposed on the fixing wall 61 and located upstream of the pump 20, and the second filter 42 may be disposed on the support portion 63.

The fixture 60 may include a first part 65 and a second part 66 which are detachably connected, wherein the first part 65 may be fixedly connected with the tray 50 or integrally formed, and the second part 66 may be provided with the support portion 63 and fixed with the pump 20, so that a user can remove the second part 66 from the internal assembly 100 to replace the second filter 42 or clean the second part 66. The first part 65 and the second part 66 can be provided with matching threads, so that the first part 65 and the second part 66 can be connected by threads, and of course, they can also be connected by snaps or other connecting device, which is not limited here.

The fixture 60 may be a hollow tube extending downward from the bottom of the tray 50, and the fixing wall 61 is formed by the wall of the hollow tube. The first combination 62 is arranged inside the fixing wall 61, so that part or all of the pump 20 can be enclosed in the fixing wall 61. The supporting portion 63 can protrude inwardly from the inner side of the fixing wall 61 toward the center of the hollow tube to form a support surface. A drain hole 67 is formed on the supporting part 63, and the drain hole 67 communicates with the water tank 10 above the supporting portion 63. The second filter 42 can be placed on the supporting portion 63.

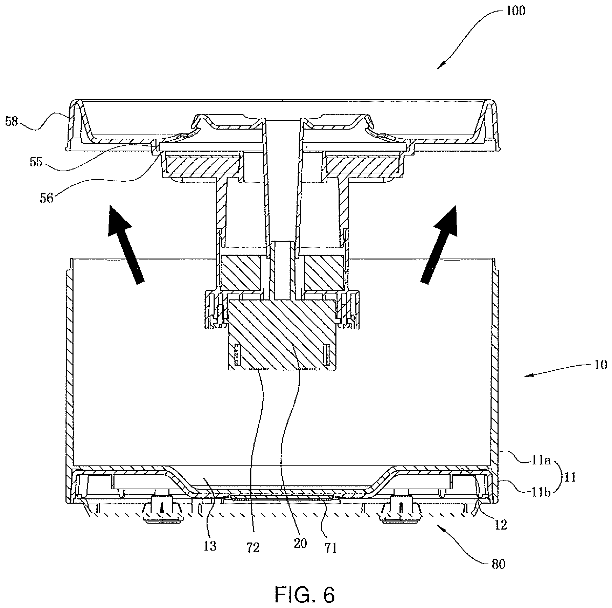

Referring to FIG. 6, when the user lifts the internal assembly 100, the internal assembly 100 can be separated from the tank 10. The user can remove the internal assembly 100 from the tank 10 to replace the water stored in the tank 10 or clean the tank 10. When the internal assembly 100 is inserted into the tank 10, the internal assembly 100 can be combined with the tank 10. In combination, the pump 20 can be located above the bottom 12 without contacting with the bottom 12, which can solve the problem of high noise when the pump 20 works due to its contact with the bottom 12.

The pump 20 can be arranged at the lower end of the fixture 60, so that the water inlet (not shown) of the pump 20 is as close as possible to the bottom 12 of the tank 10, so that the pump 20 can operate when the water in the tank 10 is at a low level. A sink 13 can be formed in the bottom 12 of the tank 10. When the internal assembly 100 is inserted into the tank 10, the pump 20 can be inserted into the sink 13, so that the water inlet of the pump 20 is located in the sink 13, thus the utilization rate of the water in the tank 10 can be further improved.

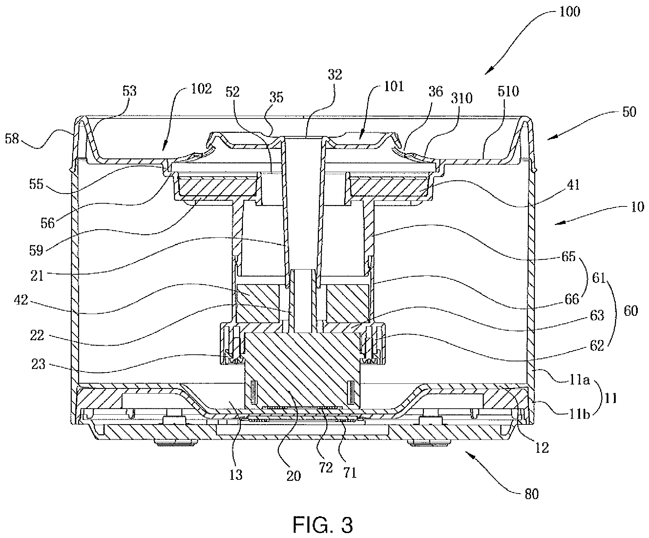

Referring to FIGS. 3 and 6, the pet drinking fountain may further include a wireless power transmitting device 71 and a wireless power receiving device 72 provided in the internal assembly 100. The transmitting device 71 may transmit power to the receiving device 72 by a wireless power transfer method, and the receiving device 72 may supply electric power to electronic devices (such as the pump 20) in the internal assembly 100. Since the electric power can be wirelessly transmitted to the internal assembly 100, the internal assembly 100 advantageously does not need to connect an external electric power source through a power cord, so that the internal assembly 100 can be easily separated from the tank 10 without interference from the power cord.

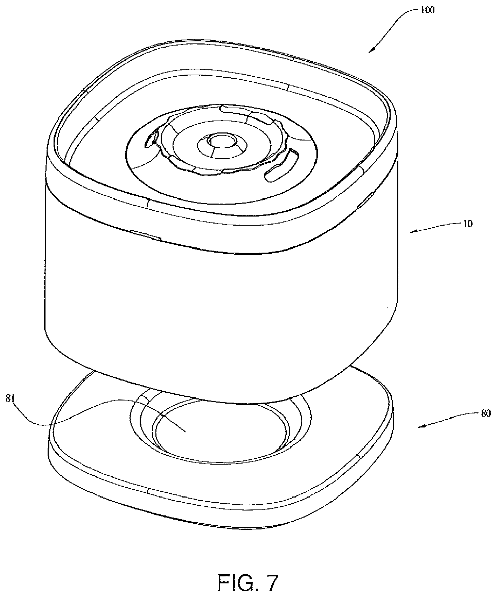

Referring to FIGS. 6 and 7, the transmitting device 71 may be disposed on a base 80 below the tank 10. The base 80 may include a power cord (not shown) which may connect the wireless power transmitting device 71 with the external electric power source. The receiving device 72 can be arranged at the lower end of the internal assembly 100, so that the transmitting device 71 and the receiving device 72 can be as close as possible to ensure the stability of wireless transmission. When the electronic equipment in the internal assembly 100 is only the pump 20, the receiving device 72 can be arranged in the pump 20 to form a single or integral assembly with the pump 20, so that no additional wiring is needed inside the internal assembly 100.

The base 80 can be configured to be separated from the tank 10. When the tank 10 is placed on the base 80, the base 80 can be located in the space below the bottom 12, so that the base 80 and the tank 10 are not easily separated. The base 80 may be formed with a recess 81 matched with the sink 13, and when the tank 10 is placed on the base 80, the sink 13 can be inserted into the recess 81, so that the tank 10 can be stably supported on the base 80.

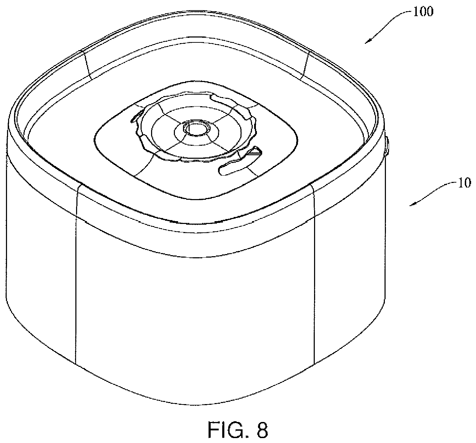

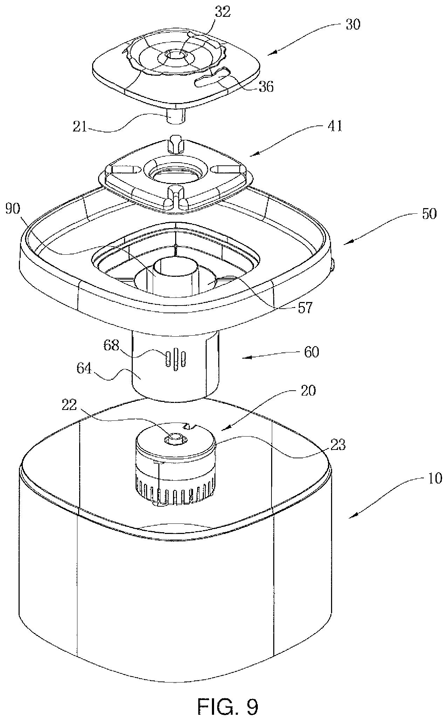

Referring to FIGS. 8-10, a pet drinking fountain according to another embodiment may include an internal assembly 100 detachably inserted into a tank 10 to supply water from the tank 10 to the outside. As shown in FIG. 9, the pet drinking fountain may include the tank 10 for storing water, a pump 20 installed or located in the tank 10 to pump the water stored in the tank 10, a water supply pipe 21 connected to the pump 20, and a water supply plate 30, wherein the water in the tank 10 can be supplied to the water supply plate 30 by the pump 20 and the water supply pipe 21. The pump 20, the water supply pipe 21 and the water supply plate 30 may be a part of the internal assembly 100. The pump 20 may be an electronic device containing internal electronic components.

The internal assembly 100 may further include a tray 50, and the water supply plate 30 may be detachably disposed at the top of the tray 50. The pump 20, the water supply pipe 21, the water supply plate 30 and the tray 50 may be combined to form a single internal assembly 100.

The internal assembly 100 may further include a fixture 60 for fixing the pump 20 to the lower end of the water supply pipe 21 when the internal assembly 100 is assembled, and maintaining the lower end of the water supply pipe 21 in communication with the water outlet 22 of the pump 20. The fixture 60 includes a hollow tube 64 extending downward from the bottom of the tray 50. When the pump 20 is fixed to the fixture 60, part or all of the pump 20 can be enclosed in the hollow tube 64.

The water supply plate 30 is formed with a water supply hole 32 and a backflow hole 36, the tray 50 is formed with a drain hole 57, and the wall of the hollow tube 64 can be provided with an overflow hole 68, so that the water discharged from the water supply hole 32 can flow back to the tank 10 through a backflow channel formed at least partially by the backflow hole 36, the drain hole 57 and the overflow hole 68. Therefore, the water in the tank 10 can be circulated through the pump 20, the water supply pipe 21, the water supply hole 32, the backflow hole 36, the drain hole 57 and the overflow hole 68.

The internal assembly 100 may further include a filter assembly disposed upstream of the hole 68 to filter foreign impurities contained in the water before the water flows into the tank 10 through the overflow hole 68. Referring to FIG. 9, the filter assembly may include a first filter 41 placed on the tray 50, and the water flowing back from the backflow hole 36 is filtered to remove impurities while flowing through the first filter 41, and then flows back to the tank 10 through the overflow hole 68. The pump 20, the water supply pipe 21, the water supply plate 30, the first filter 41 and the tray 50 may be combined to form the single internal assembly 100. The water supply plate 30 may be configured to be lifted and removed from the internal assembly 100 to replace the first filter 41.

The filter assembly may include a second filter (not shown in the figure), and the water flowing back to the tank 10 from the drain hole 57 is filtered to remove impurities while flowing through the second filter 42. The pump 20, the water supply pipe 21, the water supply plate 30, the tray 50 and the second filter 42 may be combined to form the single internal assembly 100.

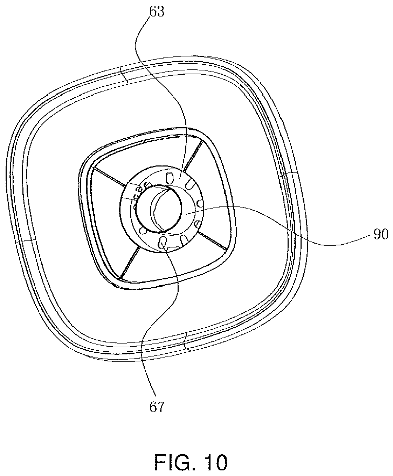

As shown in FIG. 10, the fixture 60 may further include a support portion 63, which is disposed in the hollow tube 64, and the second filter is disposed on the support portion 63. The support portion 63 may be formed by a shelf or a protrusion that protrudes inward from the inner wall of the hollow tube 64 toward the center of the hollow tube 64 to form a supporting surface, and a drain hole 67 is formed on the supporting surface.

As shown in FIGS. 8 and 10, the internal assembly 100 may further include a sleeve 90 disposed in the hollow tube 64 and extending along the direction of the hollow tube 64, and a part of the backflow channel is formed between the outer wall of the sleeve 90 and the inner wall of the hollow tube 64, and a filter assembly is sleeved between the outer wall of the sleeve 90 and the inner wall of the hollow tube 64.

As shown in FIG. 8, the inner wall of the hollow tube 64 is provided with a first combination (not shown in the figure), and the pump 20 is provided with a second combination 23. The first combination and the second combination 23 are combined to fix the pump 20 at the lower end of the hollow tube 64. The first combination can be an engaging groove provided on the inner wall of the hollow tube 64, and the second combination 23 can be an engaging protrusion provided on the pump 20, and the engaging groove and the engaging protrusion are suitable. The mating connection achieves fixing the pump 20 at the lower end of the hollow tube 64. In one embodiment, the pump 20 is configured such that when the pump 20 is fixed at the lower end of the hollow tube 64, the pump 20 blocks the opening of the lower end of the hollow tube 64, so that the water flowing back from the backflow channel can only flow back to the tank 10 through the overflow hole 68.

For other structures of the pet drinking fountain of this embodiment, reference may be made to the implementation of the pet drinking fountain of the previous embodiment, and some technical features of the pet drinking fountains of the two previous embodiments can be combined with each other, which will not be repeated here.

The above descriptions are only preferred embodiments and are not intended to limit the disclosure. Any modification, equivalent replacement and improvement made within the spirit and principle of the disclosure shall be included in the scope of protection of the disclosure.

## Claims

1. A pet drinking fountain comprising:
a tank including a bottom and a wall surrounding the bottom;
an internal assembly for supplying water from the tank to the outside;
wherein the internal assembly comprises a tray, a pump, a pipe and a fixture, and the internal assembly is detachably arranged above the bottom;
wherein the pump is arranged in the tank to pump water;
wherein the pipe is connected to the pump, and water pumped by the pump is supplied to the outside through the pipe;
wherein the fixture is configured to extend downward from the tray and fix the connection between the pump and the pipe.

2. The pet drinking fountain of claim 1, further comprising a filter assembly arranged upstream of the pump.

3. The pet drinking fountain of claim 2, wherein the filter assembly is arranged on the fixture.

4. The pet drinking fountain of claim 3, further comprising a supporting portion arranged on the fixture, wherein the supporting portion is provided with a drain hole, and the filter assembly is supported by the supporting portion and arranged upstream of the drain hole.

5. The pet drinking fountain of claim 1, wherein the fixture comprises a first combination, and the pump comprises a second combination, the first combination and the second combination are combined to fix the connection between the pump and the pipe.

6. The pet drinking fountain of claim 1, wherein the fixture comprises a hollow pipe extending downward from the tray, and part or all of the pump is enclosed in the hollow pipe.

7. The pet drinking fountain of claim 6, wherein the hollow pipe includes a wall on which an overflow hole is arranged.

8. The pet drinking fountain of claim 6, wherein the hollow pipe includes an opening at a lower end, and the pump is configured to block the opening.

9. The pet drinking fountain of claim 1, wherein the fixture comprises a first part and a second part which are detachably connected, the first part is connected to the tray, and the pump is fixed on the second part.

10. The pet drinking fountain of claim 1, further comprising a plate detachably arranged on the tray for presenting drinking water to pets, wherein the plate is in fluid communication with the pipe.

11. A pet drinking fountain comprising:
a tank for storing water;
a pump arranged in the tank to pump water;
a pipe connected to the pump through which the water pumped by the pump flows;
a plate for presenting drinking water to pets disposed above the tank and in fluid communication with the pipe;
a tray arranged between the plate and the tank, wherein an upper surface of the tray is formed with an embedded part which is matched with a bottom of the plate in shape, and the plate is detachably embedded in the embedded part.

12. The pet drinking fountain of claim 11, wherein the embedded part comprises a drain hole which in fluid communication with the tank.

13. The pet drinking fountain of claim 11, wherein the embedded part is configured to be formed by sinking on the upper surface of the tray, and when the plate is embedded in the embedded part, an upper surface of the plate and the upper surface of the tray are substantially equal in height at the junction so as to make a smooth transition.

14. The pet drinking fountain of claim 11, wherein the embedded part comprises: an inner wall extending downward from the upper surface of the tray; a support formed by protruding inward from a lower portion of the inner wall toward a center of the embedded part, and the bottom of the plate is supported by the support.

15. The pet drinking fountain of claim 11, wherein the plate comprises a backflow hole that is in fluid communication with the embedded part.

16. The pet drinking fountain of claim 15, wherein the tray comprises a side wall formed around the upper surface of the tray, and the height of the side wall is at least higher than the lowest height of the backflow hole.

17. The pet drinking fountain of claim 11, further comprising a filter assembly arranged upstream of the pump.

18. The pet drinking fountain of claim 17, the filter assembly is arranged in the embedded part.

19. The pet drinking fountain of claim 11, the plate defines a first drinking area.

20. The pet drinking fountain of claim 19, the plate and the tray collectively define a second drinking area.
